# EUROPEAN PATENT SPECIFICATION

(11) **EP 4 573 666 B1**
(45) Date of publication and mention of the grant of the patent: **25.02.2026**
(21) Application number: 23754251.9
(22) Date of filing: 07.08.2023
(51) Int. Cl.: H04B 3/54, H04L 12/10

(54) **METHODS AND SYSTEMS FOR TRANSMITTING DATA AND POWER IN EMI-SENSITIVE ENVIRONMENTS**
VERFAHREN UND SYSTEME ZUR ÜBERTRAGUNG VON DATEN UND ENERGIE IN EMI-EMPFINDLICHEN UMGEBUNGEN
PROCÉDÉS ET SYSTÈMES DE TRANSMISSION DE DONNÉES ET D'ÉNERGIE DANS DES ENVIRONNEMENTS SENSIBLES AU BROUILLAGE ÉLECTROMAGNÉTIQUE

(30) Priority: 18.08.2022 US 202263398879 P
(43) Date of publication of application: 25.06.2025
(73) Proprietor: Koninklijke Philips N.V., 5656 AG Eindhoven (NL)
(72) Inventor: SINGH, Aman, 5656 AG Eindhoven (NL); REDDER, Paul Franz, 5656 AG Eindhoven (NL)
(74) Representative: Philips Intellectual Property & Standards
(86) International application number: PCT/EP2023/071797
(87) International publication number: WO 2024/037911

(56) References cited:
- US-A1- 2010 178 054
- US-A1- 2021 273 564

## Description

### Field of the Invention

The present disclosure is directed generally to methods and systems for simultaneously transmitting data and power in electromagnetic interference (EMI) sensitive environments.

### Background

Magnetic resonance imaging (MRI) is a medical imaging modality that uses a magnetic field to create detailed images of a subject's internal structures. MRI has become a ubiquitous component of health care.

The MRI environment is a hostile environment. The magnetic field of the MRI system is extremely strong, and thus any ferromagnetic objects within the MRI environment can become airborne projectiles with high velocity. This includes surgical tools, monitors, and other healthcare equipment commonly used with patients. It also includes consumer equipment such as smartphones and watches. Thus, all healthcare and consumer equipment and personnel within the MRI environment must be configured or otherwise prepared to withstand the magnetic field of the MRI. Careful screening of people and objects entering the MRI environment is critical. In addition to the magnetic field, the MRI system generates a radio frequency (RF) field that can cause other complications within the MRI environment. For example, the RF field can induce currents within any wires inside the MRI environment, and can seriously disrupt communications within the MRI environment.

In addition to posing outward risks, the MRI environment and equipment is susceptible to external risks and influences. For example, one of the risks for MRI equipment is electromagnetic interference. An MRI system is extremely sensitive to external electromagnetic noise, which can cause MRI image artifacts. This presents a significant challenge when designing systems that operate in proximity to an MRI system. If the system generates too much electromagnetic interference, it can impact the very sensitive MRI equipment and can result in the MRI image artifacts.

Power cables, for example, are commonly made of materials such as copper which introduce risks associated with EMI. Galvanic wires act as conduits for EMI to get into the MRI environment from outside and thus putting MRI image quality at risk. Accordingly, most current solutions are restricted to battery power. Communications to and from the MRI environment is done wirelessly and current solutions use a point-to-point method. However, since the wireless data is sent from within a highly shielded room, the reliability of current communication methods is very low.

Current solutions requiring powered devices in the MRI environment are restricted to heavily filtered and shielded cables and/or batteries. High-power applications that cannot use batteries face other challenges when trying to address their power needs. Galvanic cables cannot be brought into the MRI environment without heavy filtering and ferrites, and feeding the cables through the waveguide is impractical. The next best method of bringing in power is via modification to the penetration panel. This method is cost prohibitive and time consuming. Additionally some older MRI spaces don't have AC plugs in the room at all and thus there is no power. US2010178054A1 discloses a converter which includes a first interface component configured to receive a power signal via a frame-based computer networking connection. The converter includes a second interface component disposed in electrical communication with the first interface component. US2021273564A1 relates to power and data distribution and more particularly, short reach power distribution.

### Summary of the Invention

The present invention is defined by the attached independent claims. Other preferred embodiments may be found in the dependent claims. The present application discloses a method (100) for transmitting data and power to minimize electromagnetic interference in an EMI-sensitive environment, comprising; transmitting data and power (120), via a first data and power transmission cable, from outside the EMI-sensitive environment, wherein the first data and power transmission cable is not suitable to transmit data and power within the EMI-sensitive environment; wherein the method is characterised by :receiving (130), at a power and data converter, the transmitted data and power;converting (140), by the power and data converter, the received data and power to a power-over-fiber (PoF) transmission format;transmitting (150), from the converter via a PoF cable, the converted power and data to within the EMI-sensitive environment; and receiving (160), by a device within the EMI-sensitive environment, the transmitted data and power. The present application discloses a system (200) for transmitting data and power to minimize electromagnetic interference in an EMI-sensitive environment, comprising; a first data and power transmission cable (210) configured to transmit data and power from a source located outside the EMI-sensitive environment, wherein the first data and power transmission cable is not suitable to transmit data and power within the EMI-sensitive environment; wherein the system is characterised by :a PoF cable (230);a power and data converter (220) configured to: (i) receive the transmitted data and power; (ii) convert the received data and power to a power-over-fiber (PoF) transmission format; and (iii) transmit the converted power and data to within the EMI-sensitive environment via the PoF cable; and a device (240) within the EMI-sensitive environment (260) configured to receive, via the PoF cable, the transmitted data and power.

### Brief Description of the Drawings

In the drawings, like reference characters generally refer to the same parts throughout the different views. Also, the drawings are not necessarily to scale, emphasis instead generally being placed upon illustrating the principles of the invention.
FIG. 1 is a flowchart of a method for transmitting data and power in an EMI-sensitive environment, in accordance with an embodiment.
FIG. 2 is a schematic representation of a data and power transmission system, in accordance with an embodiment.
FIG. 3 is a schematic representation of PoF cable for transmitting data and power in an EMI-sensitive environment, in accordance with an embodiment.

### Detailed Description of Embodiments

The present disclosure describes various embodiments of a data and power transmission system. More generally, Applicant has recognized and appreciated that it would be beneficial to provide methods and systems for transmitting data and power in EMI-sensitive environments. For example, a data and power transmission system as described or otherwise envisioned herein comprises components that enable that transmission. Data and power is transmitted via a first data and power transmission cable from outside the EMI-sensitive environment. That data and power is received by a power and data converter that converts the power and data converter to a power-over-fiber (PoF) transmission format. The power and data are then transmitted to within the EMI-sensitive environment using a PoF cable. A device within the EMI-sensitive environment then receives the transmitted data and/or power.

According to an embodiment, various methods and systems described or otherwise envisioned herein utilize Power-Over-Fiber (PoF) to send continuous power to an EMI-sensitive environment while circumventing the restrictions placed on traditional power solutions. The methods and systems provide a vital improvement to the infrastructure needs of the EMI-sensitive environment as cutting through a penetration panel, for example, is no longer needed. Accordingly, cost and time of implementation of new solutions is reduced greatly.

According to an embodiment in which the methods and systems described or otherwise envisioned herein are implemented in an MRI space, the invention also improves data communications between the MRI room and the control room. Traditional solutions use wireless solutions to communicate from within the room to outside. However, the MRI room is heavily shielded so reliability of data is low. Since fiber technology uses light, it is immune to EMI. Therefore PoF cables can be paired with fiber data to provide power and data over the same cable to a device in the MRI space.

According to an embodiment, PoF technology provides a significant advantage in overcoming the harsh environment that is the MRI environment. The technology's EMI-immune characteristics provide EMI immunity. When paired with fiber technology used in today's networking to provide high-speed duplex communication, the methods and systems described or otherwise envisioned herein provide a complete solution for patient monitoring in the MRI environment.

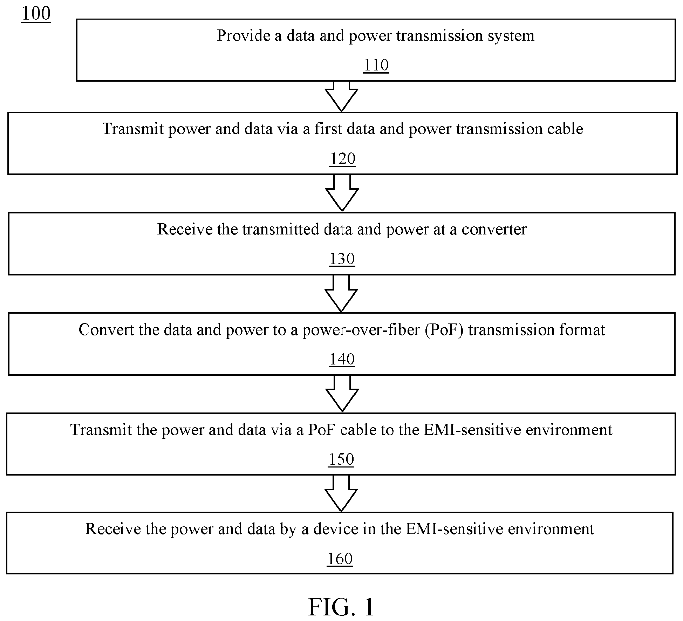

Referring to FIG. 1, in one embodiment, is a flowchart of a method 100 for transmitting data and power to minimize electromagnetic interference (EMI) in an EMI-sensitive environment, using a data and power transmission system. The methods described in connection with the figures are provided as examples only, and shall be understood not to limit the scope of the disclosure. The data and power transmission system can be any of the systems described or otherwise envisioned herein. The data and power transmission system can be a single system or multiple different systems.

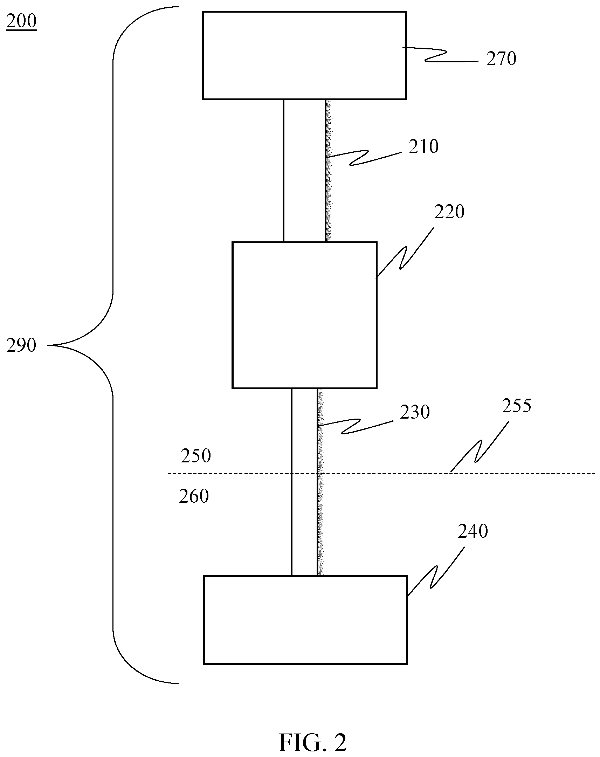

At step 110 of the method, a data and power transmission system 200 is provided. Referring to an embodiment of a data and power transmission system 200 as depicted in FIG. 2, for example, the system comprises one or more of first data and power transmission cable 210, a power and data converter 220, a power-over-fiber (PoF) cable 230, and a device 240 within the EMI-sensitive environment 260. It will be understood that FIG. 2 constitutes, in some respects, an abstraction and that the actual organization of the components of the system 200 may be different and more complex than illustrated. Additionally, data and power transmission system 200 can be any of the systems described or otherwise envisioned herein. Other elements and components of system 200 are disclosed and/or envisioned elsewhere herein.

At step 120 of the method, the data and power transmission system transits data and power using a first data and power transmission cable 210 from a source 270 to a power and data converter 220. The source can be any source of data and power, such as a computer or other power and data source. The source can be one or multiple sources. The transmitted data may be any data capable of being transmitted via a cable.

According to an embodiment, the first data and power transmission cable 210 can be any cable capable of transmitting data and power. According to an embodiment, the first data and power transmission cable is not suitable to transmit data and power within the EMI-sensitive environment. For example, the first data and power transmission cable may comprise one or more galvanic components such as metal wires that would act as antennas or conduits for EMI to enter the EMI-sensitive environment. According to just one embodiment, the first data and power transmission cable 210 may be an ethernet cable or similar cable or structure.

According to an embodiment, the transmitted power may be any power that can be transmitted through the first data and power transmission cable 210. The transmitted power will depend on the parameters and limitations of the first data and power transmission cable. In an embodiment in which the first data and power transmission cable is an ethernet, a range of power is possible. For example, standard ethernet power may be approximately 15W, while other more recent ethernet cables may be 30W, 60W, 90W, or a variety of other power levels.

At step 130 of the method, a power and data converter 220 at the other end of the first data and power transmission cable 210 receives the transmitted data and power. Once received, the data and power can be converted and transmitted immediately, or it may be stored for future transmission. The converter can be any device capable of converting the received data and power to the transmitted data and power as described or otherwise envisioned herein. Some or all of the converter may be within the EMI-sensitive environment. According to one embodiment, the converter is entirely outside a most EMI-sensitive portion of the EMI-sensitive environment. According to another embodiment, the converter is partially outside and partially inside a most EMI-sensitive portion of the EMI-sensitive environment.

At step 140 of the method, the power and data converter 220 converts the received data and power from a first format into a power-over-fiber (PoF) transmission format. The converter can convert the data and power into PoF transmission format using any method for such conversion. According to one embodiment, the converter converts the received data to modulated light transmissions. According to one embodiment, the converter converts the received power to use a laser diode to send power over fiber cables.

At step 150 of the method, the power and data converter 220 transmits the converted power and data via a power-over-fiber (PoF) cable 230. The PoF cable can be any cable capable of power-over-fiber transmission, including but not limited to fiber cables. According to an embodiment, the converted power and data is transmitted over the PoF cable within or to within the EMI-sensitive environment. In an embodiment in which the converter is entirely outside a most EMI-sensitive portion of the EMI-sensitive environment, the converted power and data is transmitted over the PoF cable from outside to inside the EMI-sensitive environment. In an embodiment in which the converter is partially outside and partially inside a most EMI-sensitive portion of the EMI-sensitive environment, the converted power and data is transmitted over the PoF cable from outside or inside the EMI-sensitive environment depending on the arrangement of the converter and the PoF cable. In an embodiment in which the converter is inside a most EMI-sensitive portion of the EMI-sensitive environment, the converted power and data is transmitted over the PoF cable within the EMI-sensitive environment.

According to one embodiment, the EMI-sensitive environment is an MRI environment. A most EMI-sensitive portion of the MRI environment could be, for example, Zones 3 and/or 4 of a medical facility, which in this embodiment is known as the MRI environment. According to another embodiment, the EMI-sensitive environment is another space or environment in which EMI isolation between an RF shielded EMI chamber and an external environment is utilized. The methods and systems provide a novel means of power and data transfer between two environments while providing a high degree of isolation, and thus high levels of EMI immunity, between the two environments.

Referring to FIG. 2, in one embodiment, the EMI-sensitive environment may be a portion of the environment 290, such as portion 260..

According to an embodiment, the EMI-sensitive portion 260 of the environment 290 may be isolated by RF shielding 255. The RF shielding can be any shielding capable of blocking or filtering or minimizing electromagnetic interference. The RF shielding may comprise a portal to allow the PoF cable 230 to transit the RF shielding without allowing RF leak.

At step 160 of the method, a device 240 inside the EMI-sensitive environment, such as inside a most EMI-sensitive portion of the MRI environment, receives the transmitted data and/or power. The device can be any device, system, component or other element within the EMI-sensitive environment that requires the data and/or power transmitted by the system. For example, the device may be a device that requires power for operation. As another example, the device may receive and use or store the transmitted data.

The device may comprise, or be in communication with, a PoF data and power receiver which is configured to receive and optionally convert, divide, and/or direct the transmitted data and power. For example, the PoF data and power receiver may split the transmitted power and direct it to one device or a portion of the device, and may split the transmitted data and direct it to one device or a portion of the device. Many other options are possible.

According to an embodiment, the PoF cable 230 may comprise multiple bundled cables, which could then supply more power. For example, if a single cable could send 0.5W of power, six parallel cables could supply 3W of power. Additionally, a single fiber for data in the PoF cable could provide full duplex communication to devices/products in the EMI-sensitive space. Accordingly the methods and systems described or otherwise envisioned herein are malleable and scalable. There can be many different form factors such as using different types of cables or constructions. The methods and systems can be scaled to meet the application it is to serve by increasing the number of fiber optic cables to provide more power per cable or more cables to provide power and data to multiple end points.

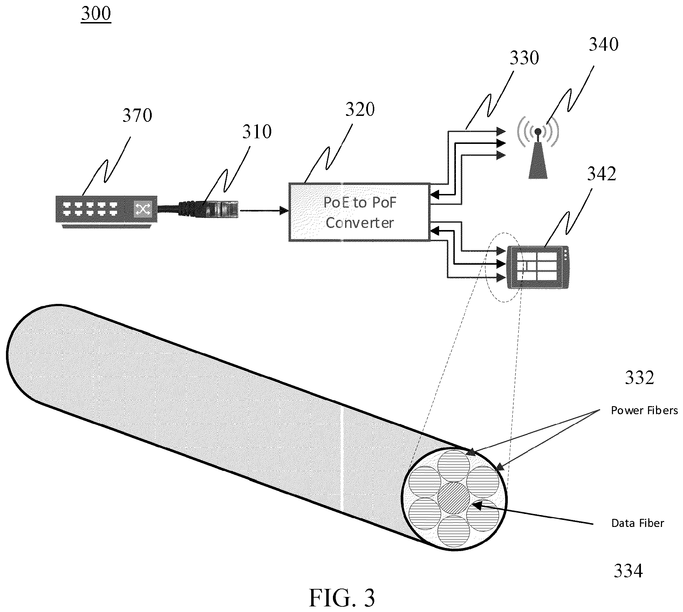

Referring to FIG. 3, in one embodiment, is a data and power transmission system 300. The data and power transmission system comprises a source 370, such as a computer, server, or other source of data and power, that transmits data and power via a first data and power transmission cable 310 such as an ethernet cable. The transmitted data and power are received by a converter 320 (a Power-over-Ethernet (PoE) to PoF converter), which convers the data and power into PoF transmission format. The converted data and power are then transmitted via a PoF cable 330 to a device 340 or 342. For example, device 340 may require the power transmitted via the PoF cable and received by the system in the EMI-sensitive environment, and device 343 may require the data transmitted via the PoF cable and received by the system in the EMI-sensitive environment. As shown in FIG. 3, the PoF cable 330 may comprise a data fiber 334 which in this example is central to the cable, and may comprise one or more power fibers 332 which in this example comprises multiple power fibers positioned around the data fiber. Many other configurations are possible.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively, as set forth in the United States Patent Office Manual of Patent Examining Procedures, Section 2111.03.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

## Claims

1. A method (100) for transmitting data and power to minimize electromagnetic interference,EMI, in an EMI-sensitive environment, comprising;
transmitting data and power (120), via a first data and power transmission cable, from outside the EMI-sensitive environment, wherein the first data and power transmission cable is not suitable to transmit data and power within the EMI-sensitive environment; wherein the method is **characterised by**:
receiving (130), at a power and data converter, the transmitted data and power;
converting (140), by the power and data converter, the received data and power to a power-over-fiber (PoF) transmission format;
transmitting (150), from the converter via a PoF cable, the converted power and data to within the EMI-sensitive environment; and
receiving (160), by a device within the EMI-sensitive environment, the transmitted data and power.

2. The method of claim 1, wherein the EMI-sensitive environment is an MRI environment.

3. The method of claim 1, wherein the first data and power transmission cable is an ethernet cable.

4. The method of claim 1, wherein some of the converter is within the EMI-sensitive environment.

5. The method of claim 1, wherein the converter is positioned outside a most EMI-sensitive portion of the EMI-sensitive environment.

6. The method of claim 1, wherein the device within the EMI-sensitive environment is configured to split the received data and power.

7. A system (200) for transmitting data and power to minimize electromagnetic interference,EMI, in an EMI-sensitive environment, comprising;
a first data and power transmission cable (210) configured to transmit data and power from a source located outside the EMI-sensitive environment, wherein the first data and power transmission cable is not suitable to transmit data and power within the EMI-sensitive environment; wherein the system is **characterised by**:
a PoF cable (230);
a power and data converter (220) configured to: (i) receive the transmitted data and power; (ii) convert the received data and power to a power-over-fiber (PoF) transmission format; and (iii) transmit the converted power and data to within the EMI-sensitive environment via the PoF cable; and
a device (240) within the EMI-sensitive environment (260) configured to receive, via the PoF cable, the transmitted data and power.

8. The system of claim 7, wherein the EMI-sensitive environment is an MRI environment.

9. The system of claim 7, wherein the first data and power transmission cable is an ethernet cable.

10. The system of claim 7, wherein some of the converter is within the EMI-sensitive environment.

11. The system of claim 7, wherein the converter is positioned outside a most EMI-sensitive portion of the EMI-sensitive environment.

12. The system of claim 7, wherein the device within the EMI-sensitive environment is configured to split the received data and power.

## Patentansprüche

1. Verfahren (100) zum Übertragen von Daten und Energie zur Minimierung elektromagnetischer Störungen (EMI) in einer EMI-empfindlichen Umgebung, umfassend:
Übertragen von Daten und Energie (120) über ein erstes Daten- und Energieübertragungskabel von außerhalb der EMI-empfindlichen Umgebung, wobei das erste Daten- und Energieübertragungskabel nicht geeignet ist, Daten und Energie innerhalb der EMI-empfindlichen Umgebung zu übertragen; wobei das Verfahren **gekennzeichnet ist, durch**:
Empfangen (130) der übertragenen Daten und Energie an einem Energie- und Datenwandler;
Umwandeln (140) der empfangenen Daten und Energie **durch** den Energie- und Datenwandler in ein Power-over-Fiber Übertragungsformat (PoF-Übertragungsformat);
Übertragen (150) der umgewandelten Energie und Daten vom Wandler über ein PoF-Kabel innerhalb der EMI-empfindlichen Umgebung; und
Empfangen (160) der übertragenen Daten und Energie **durch** eine Vorrichtung innerhalb der EMI-empfindlichen Umgebung.

2. Verfahren nach Anspruch 1, wobei es sich bei der EMI-empfindlichen Umgebung um eine MRI-Umgebung handelt.

3. Verfahren nach Anspruch 1, wobei es sich bei dem ersten Daten- und Energieübertragungskabel um ein Ethernet-Kabel handelt.

4. Verfahren nach Anspruch 1, wobei sich ein Teil des Wandlers innerhalb der EMI-empfindlichen Umgebung befindet.

5. Verfahren nach Anspruch 1, wobei der Wandler außerhalb eines EMI-empfindlichsten Bereichs der EMI-empfindlichen Umgebung angeordnet ist.

6. Verfahren nach Anspruch 1, wobei die Vorrichtung in der EMI-empfindlichen Umgebung so konfiguriert ist, dass sie die empfangenen Daten und Energie aufteilt.

7. System (200) zum Übertragen von Daten und Energie zur Minimierung elektromagnetischer Störungen (EMI) in einer EMI-empfindlichen Umgebung, umfassend:
ein erstes Daten- und Energieübertragungskabel (210), das zur Übertragung von Daten und Energie von einer Quelle außerhalb der EMI-empfindlichen Umgebung konfiguriert ist, wobei das erste Daten- und Energieübertragungskabel nicht zur Übertragung von Daten und Energie innerhalb der EMI-empfindlichen Umgebung geeignet ist; wobei das System durch Folgendes gekennzeichnet ist:
ein PoF-Kabel (230);
einen Energie- und Datenwandler (220), der so konfiguriert ist, dass er: (i) die übertragenen Daten und Energie empfängt; (ii) die empfangenen Daten und Energie in ein Power-over-Fiber-, (PoF)-, Übertragungsformat umwandelt; und (iii) die umgewandelten Energie und Daten über das PoF-Kabel innerhalb der EMI-empfindlichen Umgebung überträgt; und
eine Vorrichtung (240) innerhalb der EMI-empfindlichen Umgebung (260), die so konfiguriert ist, dass sie über das PoF-Kabel die übertragenen Daten und Energie empfängt.

8. System nach Anspruch 7, wobei es sich bei der EMI-empfindlichen Umgebung um eine MRI-Umgebung handelt.

9. System nach Anspruch 7, wobei es sich bei dem ersten Daten- und Energieübertragungskabel um ein Ethernet-Kabel handelt.

10. System nach Anspruch 7, wobei sich ein Teil des Wandlers innerhalb der EMI-empfindlichen Umgebung befindet.

11. System nach Anspruch 7, wobei der Wandler außerhalb eines EMI-empfindlichsten Bereichs der EMI-empfindlichen Umgebung angeordnet ist.

12. System nach Anspruch 7, wobei die Vorrichtung in der EMI-empfindlichen Umgebung so konfiguriert ist, dass sie die empfangenen Daten und Energie aufteilt.

## Revendications

1. Procédé (100) de transmission de données et d'énergie pour minimiser les interférences électromagnétiques, EMI, dans un environnement sensible aux EMI, comprenant ;
la transmission de données et d'énergie (120), via un premier câble de transmission de données et d'énergie, depuis l'extérieur de l'environnement sensible aux EMI, dans lequel le premier câble de transmission de données et d'énergie n'est pas adapté à la transmission de données et d'énergie à l'intérieur de l'environnement sensible aux EMI ; dans lequel le procédé est **caractérisé par** :
la réception (130), au niveau d'un convertisseur d'énergie et de données, des données et de l'énergie transmises ;
la conversion (140), par le convertisseur d'énergie et de données, des données et de l'énergie reçues en un format de transmission power-over-fibre (PoF) ;
la transmission (150), depuis le convertisseur via un câble PoF, de l'énergie et des données converties vers l'environnement sensible aux EMI ; et
la réception (160), par un dispositif situé dans l'environnement sensible aux EMI, des données et de l'énergie transmises.

2. Procédé selon la revendication 1, dans lequel l'environnement sensible aux EMI est un environnement IRM.

3. Procédé selon la revendication 1, dans lequel le premier câble de transmission de données et d'énergie est un câble Ethernet.

4. Procédé selon la revendication 1, dans lequel une partie du convertisseur se trouve dans un environnement sensible aux EMI.

5. Procédé selon la revendication 1, dans lequel le convertisseur est positionné à l'extérieur d'une partie la plus sensible aux EMI de l'environnement sensible aux EMI.

6. Procédé selon la revendication 1, dans lequel le dispositif situé dans l'environnement sensible aux EMI est configuré pour séparer les données et l'énergie reçues.

7. Système (200) de transmission de données et d'énergie pour minimiser les interférences électromagnétiques, EMI, dans un environnement sensible aux EMI, comprenant ;
un premier câble de transmission de données et d'énergie (210) configuré pour transmettre des données et de l'énergie à partir d'une source située en dehors de l'environnement sensible aux EMI, dans lequel le premier câble de transmission de données et d'énergie n'est pas adapté à la transmission de données et d'énergie à l'intérieur de l'environnement sensible aux EMI ; dans lequel le système est **caractérisé par** :
un câble PoF (230) ;
un convertisseur d'énergie et de données (220) configuré pour : (i) recevoir les données et l'énergie transmises ; (ii) convertir les données et l'énergie reçues en un format de transmission power-over-fibre (PoF) ; et (iii) transmettre l'énergie et les données converties dans l'environnement sensible aux EMI via le câble PoF ; et
un dispositif (240) dans l'environnement sensible aux EMI (260) configuré pour recevoir, via le câble PoF, les données et l'énergie transmises.

8. Système selon la revendication 7, dans lequel l'environnement sensible aux EMI est un environnement IRM.

9. Système selon la revendication 7, dans lequel le premier câble de transmission de données et d'énergie est un câble Ethernet.

10. Système selon la revendication 7, dans lequel une partie du convertisseur se trouve dans un environnement sensible aux EMI.

11. Système selon la revendication 7, dans lequel le convertisseur est positionné à l'extérieur d'une partie la plus sensible aux EMI de l'environnement sensible aux EMI.

12. Système selon la revendication 7, dans lequel le dispositif situé dans l'environnement sensible aux EMI est configuré pour séparer les données et l'énergie reçues.
